# EUROPÄISCHE PATENTSCHRIFT

(11) **EP 0 777 797 B1**
(45) Veröffentlichungstag und Bekanntmachung des Hinweises auf die Patenterteilung: **27.02.2002**
(21) Anmeldenummer: 96918607.1
(22) Anmeldetag: 18.06.1996
(51) Int. Cl.: E04D 11/00

(54) **AUS MEHREREN SCHICHTEN BESTEHENDES VEGETATIONSELEMENT**
MULTILAYERED VEGETATION ELEMENT
ELEMENT DE VEGETATION A COUCHES MULTIPLES

(30) Priorität: 28.06.1995 DE 19523406
(43) Veröffentlichungstag der Anmeldung: 11.06.1997
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner
(86) Internationale Anmeldenummer: DE9601114
(87) Internationale Veröffentlichungsnummer: WO9701687

(56) Entgegenhaltungen:
- WO-A-95/08259
- DE-A- 2 438 301
- DE-A- 3 631 716
- DE-A- 3 805 069
- DE-A- 4 135 714
- DE-A- 4 219 275

## Beschreibung

Die Erfindung betrifft ein aus mehreren Schichten bestehendes Vegetationselement für die Begrünung von künstlichen Ebenen, wie Dächer oder anderen Flächen, insbesondere zur Begrünung von großen Flächen, wie für die Begrünung von großen Industriedächern.

Die Begrünung von künstlichen Ebenen und hier vor allem die Dachbegrünung von Gebäuden hat sich schon seit langem wegen ihrer positiven Aspekte bewährt und durchgesetzt. Dabei kommt bei großen Flächen im allgemeinen eine Anspritzbegrünung in Betracht, bei welcher eine Begrünungsmasse direkt vor Ort auf das Dach gespritzt wird, und daneben ist es auch bekannt, fertig vorkultivierte und aufrollbare Vegetationsrollmatten auf dem Dach zu verlegen. Mit dieser Alternative zur Anspritzbegrünung beschäftigt sich die vorliegende Erfindung.

In der Praxis werden die Vegetationsmatten von dem Hersteller auf natürlichem Boden vorkultiviert. Gemäß dem deutschen Patent DE 36 31 716 C2 und dem deutschen Patent DE 42 19 275 C2 wird beim Stand der Technik wie folgt vorgegangen. Auf dem natürlichen Erdboden wird eine abdichtende Folie ausgelegt, und auf diese Folie wird eine Trägerkonstruktion für eine Vegetation gelegt. Die Folie dichtet die Trägerkonstruktion ab, um eine Durchwurzelung der zu kultivierenden Pflanzen in den natürlichen Boden zu verhindern.

Auf bzw. in die Trägerkonstruktion werden anschließend Substrat, Saatgut, Pflanzenteile und Dünger gebracht, und danach wird schattiert (Schutz gegen Sonne und Wind).

Es folgt dann eine lange dauernde gärtnerische Pflege durch Bewässerung und Düngung der Pflanzen, bis die Trägerkonstruktion fertig begrünt ist und als fertige Vegetationsmatte zum Einsatz für eine Dachbegrünung zur Verfügung steht. Bis die Vegetationsmatten vollständig begrünt sind und die Vorkultivierungszeit beendet ist, können mehrere Monate vergehen. Erst dann sind die Vegetationsmatten für eine Dachbegrünung verwendbar.

Bezüglich des Schichtaufbaus weist das aus der erwähnten DE 36 31 716 C2 bekannte Vegetationselement eine untere und obere Schicht jeweils aus einem Gewebe oder Vlies und eine zwischen diesen Schichten befindliche Trägerschicht für die zu kultivierende Vegetation auf, wobei diese Trägerschicht vornehmlich aus verrottbarem Material, wie Kokos, Stroh und dergleichen besteht.

In dem weiteren Dokument DE 42 19 275 C2 werden verschiedene Möglichkeiten des Schichtaufbaus des dortigen Vegetationselementes beschrieben, wobei der Schichtaufbau jeweils das Ziel verfolgt, durch die Schichten und ihre Materialien eine optimale Brandsicherheit zu gewährleisten. Hier kann eine untere Trennschicht ein Vliesmaterial sein, oder alternativ aus Jute, Filz oder Geotextil bestehen. Über dieser Trennschicht ist eine kombinierte Kultur-/ Feuerhemmschicht angeordnet, welche aus Steinwolle besteht. Über dieser kombinierten Kultur-/Feuerhemmschicht ist schließlich eine Krallschicht angeordnet, welche entweder aus einem Kunststoff-Schlinggewebe oder alternativ aus einem Fasergewirr aus Kokosfasern besteht.

In dem Dokument DE 42 19 275 C2 wird neben der oben beschriebenen Vorkultivierung auch noch alternativ erwähnt, daß die Kulturschicht mit Saatgut versehen ist. Hier wird das Vegetationselement also entweder langwierig mit lebenden Pflanzenteilen vorkultiviert, oder es wird das nur mit Saatgut versehene Vegetationselement ohne Vorkultivierungsmaßnahmen auf das Dach gebracht.

Neben der langen Vorkultivierungszeit ist es beim beschriebenen Stand der Technik von Nachteil, daß die Vegetationsmatten auf Vorrat produziert werden müssen und solange beim Hersteller in der Pflege bleiben, bis ein Auftrag für eine Dachbegrünung vorliegt. Erst dann werden die Vegetationsmatten aufgerollt und zum gewünschten Einsatzort transportiert. In diesem Zusammenhang ist als weiterer Nachteil zu nennen, daß die fertig vorkultivierten Vegetationsrollmatten sehr schwer sind, wodurch hohe Frachtkosten entstehen.

Am Einsatzort'ist es dann erforderlich, die schweren Vegetationsrollmatten auf das Dach zu bringen und dort endgültig zu verlegen. Auch bei diesen Vorgängen steht das schwere Gewicht der Vegetationsrollmatten einer einfachen Handhabung entgegen.

Wenn schließlich für die vorkultivierten Vegetationsmatten keine Abnehmer zu finden sind, ist es ein weiterer Nachteil, daß die gesamte Vorkultur über einen immer längeren Zeitraum gepflegt werden muß und schlimmstenfalls sogar unbrauchbar wird. Wegen der langen Vorkultivierungszeit ist es nämlich nicht immer möglich, die Vegetationsmatten stets nach Bedarf zu produzieren. Vielmehr ist der Hersteller gehalten, die Vorfinanzierung für die Kultivierung der Vegetationsmatten auf Risiko zu übernehmen.

Der Erfindung liegt die Aufgabe zugrunde, ein vegetationselement zu schaffen, welches den Hersteller weitgehend von den voranstehend geschilderten Nachteilen befreit und welche es ermöglichen, die Vegetationselemente für den jeweiligen konkreten Bedarf zu produzieren und innerhalb kurzer Zeit sowohl zu verarbeiten als auch auf einer gewünschten Fläche zu verlegen.

Zur Lösung dieser Aufgabe weist das aus mehreren Schichten bestehende Vegetationselement die in den nebengeordneten Patentansprüchen 1 und 2 angegebenen Merkmale auf.

Ein wesentlicher Gesichtspunkt bei der Erfindung besteht darin, daß dem aus mehreren mechanisch miteinander verbundenen Schichten bestehendem Vegetationselement neben Saatgut auch lebende Pflanzenteile zugegeben sind. Während bei Saatgut eine relativ lange Wachstumsphase besteht, wachsen die lebenden Pflanzenteile wesentlich schneller. Außerdem ist man mit der Anwendung von lebenden Pflanzenteilen auch unabhängig von der Saatgutproduktion.

Die Verwendung der lebenden Pflanzenteile ist im Zusammenhang mit dem besonderen schichtförmigen Aufbau des Vegetationselements und auch im Zusammenhang mit dem Saatgut zu sehen. Eine besondere Rolle spielt bei der Alternative gemäß dem Patentanspruch 1 die obere als Schutzschicht ausgebildete Halteschicht des Vegetationselements. Diese Halteschicht verhindert nicht nur, daß die Pflanzenteile oder auch das Saatgut durch Windeinwirkung wegwehen, vielmehr sorgt die über den Pflanzenteilen befindliche Halteschicht für einen Bodenkontakt zur unter den Pflanzenteilen befindlichen Mineralwollschicht. Die Pflanzenteile werden durch die obere Halteschicht gegen die Mineralwollschicht gedrückt und können dadurch besser wurzeln.

Die Verwendung von lebenden Pflanzenteilen ist selbstverständlich nur bei bestimmten Pflanzenarten möglich, z.B. bei Sukkulenten (Dickfleischgewächse). Wegen der gleichzeitigen Anwendung von Saatgut und Pflanzenteilen ist es empfehlenswert, hier jeweils von Pflanzen der gleichen Gattung auszugehen. In diesem Fall kann das Saatgut als Sicherheit und Reserve für den Fall dienen, daß nicht alle Pflanzenteile vollständig wachsen sollten. Es ist aber auch denkbar, Pflanzenteile einer ersten Pflanzenart und Saatgut einer zweiten anderen Pflanzenart gemeinsam zu verwenden.

Bei der alternativen Lösung gemäß dem nebengeordneten Patentanspruch 2 schließt sich an die unterste Schicht aus Vlies direkt eine Mineralwollschicht an, und auf dieser Schicht befindet sich eine gemischte Kokos-Pflanzenschicht, die durch eine mit Saatgut und lebenden Pflanzenteilen vermischte Kokosschicht gebildet ist. Diese Kokosschicht enthält also bereits als Bestandteile das Saatgut und die lebenden Pflanzenteile, welche teilweise auch auf der Kokosschicht liegen können.

Die erwähnte Kokos-Pflanzenschicht wirkt praktisch sowohl als Wachstumsschicht wie auch als Halteschicht. Die sich ausbildenden Wurzeln können sich in die darunter liegende Mineralwollschicht erstrecken.

Ein entscheidender Vorteil der Erfindung besteht darin, daß die eingangs beschriebene Vorkultivierungszeit vollständig entfällt. Vielmehr ist es möglich, die erfindungsgemäßen Vegetationselemente für den jeweiligen Bedarf und nach Auftragslage zu produzieren.

Ein weiterer wesentlicher Gesichtspunkt der Erfindung besteht nämlich darin, daß das Vegetationselement kein Substrat enthält und deshalb im übrigen auch vergleichsweise leicht ist. Das für die komplette Dachbegrünung nach wie vor erforderliche Substrat wird zunächst auf dem Dach aufgebracht, und auf diese Substratschicht wird dann das erfindungsgemäße Vegetationselement ausgerollt bzw. aufgelegt.

Es ist darauf zu achten, daß die erfindungsgemäßen Vegetationselemente innerhalb relativ kurzer Zeit von etwa zwei Tagen verarbeitet sein müssen, da sonst die Gefahr besteht, daß die lebenden Pflanzenteile verderben. Im zum Zwecke des Transportes zum Einsatzort aufgerollten Zustand der Vegetationselemente können sich nämlich leicht Wärme und Feuchtigkeit entwickeln und außerdem ist kaum Licht vorhanden. Als Folge davon können die lebenden Pflanzenteile unbrauchbar werden, wenn diese Faktoren über eine längere Zeitdauer gegeben sind und der Transport zu lange dauert.

Da eine Vorkultivierung nicht mehr erforderlich ist, entfallen die langwierigen Pflegekosten. Auch der Nachteil einer möglichen Überproduktion auf Vorrat ist nicht mehr gegeben. Vielmehr besteht nun die Möglichkeit, die erfindungsgemäßen Vegetationselemente bei Vorliegen eines entsprechenden Auftrages sofort anzufertigen und innerhalb kurzer Zeit am Einsatzort auf einem Dach zu verlegen, auf welchem sich eine Substratschicht befindet.

Wegen des Wegfalls der langen Vorkultivierungszeit bzw. wegen des Fehlens von Substrat sind die neuen Vegetationselemente von vergleichsweise geringem Gewicht, welches bei nur etwa 20 % des Gewichtes von fertig begrünten und vorkultivierten Vegetationsmatten liegt. Dementsprechend verringern sich auch die Frachtkosten erheblich.

Das geringe Gewicht der Vegetationselemente führt aber noch zu weiteren Vorteilen. So ist die Handhabung sowohl am Herstellungsort als insbesondere auch am Einsatzort sehr viel einfacher und die Vegetationselemente lassen sich schnell verlegen, wobei für diese Arbeiten nicht einmal unbedingt ein Fachmann erforderlich ist. Dies führt zu finanziellen Vorteilen.

Zwar kann es gegebenenfalls erforderlich sein, die Vegetationselemente in der Anfangsphase zu wässern, jedoch steht dieser Umstand in keinem Verhältnis zu den voranstehend geschilderten Vorteilen.

Als besonders günstig erweist sich die Erfindung bei der Begrünung von großen Flächen, wie großen Dächern von Industriegebäuden. Hier kommen die erwähnten Vorteile besonders zum Tragen, und insbesondere stellt die Erfindung hier eine kostengünstige Alternative zur an sich preisgünstigen Anspritzbegrünung dar.

Der Ansatzpunkt für die Erfindung liegt darin, unter Verzicht auf die teure und zeitaufwendige Vorkultivierung dem jeweiligen konkreten Bedarf entsprechend Vegetationselemente zu produzieren, die innerhalb kürzester Zeit einsatzbereit und auf einem mit einem Substrat versehenen Dach verlegbar sind. Die lebenden Pflanzenteile wachsen im Vergleich zum Saatgut sehr schnell, und wenn die neuartigen Vegetationselemente auf dem Dach verlegt sind, kann das Saatgut am Standort nachwachsen, während die Pflanzenteile bereits eine erste Begrünung bewirken. Als besonders vorteilhaft erweist sich die Erfindung bei größeren Flächen ab etwa 5.000 m². Bei dieser Größenordnung kommen die geschilderten Vorteile wie die geringen Frachtkosten, die schnelle Verlegung und der Wegfall der Vorkultivierungszeit besonders deutlich zum Tragen.

Bei der Erfindung ist auch die Verwendung von Mineralwolle, beispielsweise in Form von Steinwolle, von besonderem Vorteil, wobei die Mineralwolle als wasserspeichernde Schicht dient. Die Wasserkapazität beträgt etwa 95 %, d. h., die Mineralwolle kann 95 % ihres Gewichts an Wasser aufnehmen und speichern. Es genügt daher, nach dem Verlegen des erfindungsgemäßen Vegetationselements auf dem Dach bzw. auf der dort befindlichen Substratschicht eine Wässerung vorzunehmen, um ein Wachstum zu ermöglichen.

Im übrigen wird die Mineralwolle durch das aufgenommene Wasser schwer und trägt damit in vorteilhafter Weise noch zu einer Lagesicherheit des Vegetationselements auf dem Dach bei, bis eine Verwurzelung der sich ausbildenden Pflanzen mit dem Substrat eingetreten ist.

In einer zweckmäßigen Ausgestaltung der Erfindung ist vorgesehen, daß der Pflanzenschicht, welche die lebenden Pflanzenteile und das Saatgut enthält, zusätzlich noch Dünger beigegeben ist. Das Substrat des Vegetationselements, welches praktisch durch die untere Schicht aus Kokos und durch die Mineralwollschicht gebildet wird, kann nämlich als weitgehend nährstoffneutral angesehen werden, wobei im übrigen die Mineralwollschicht noch eine Funktion als Brandschutz übernimmt. Vorzugsweise kann als Mineralwolle Steinwolle verwendet werden.

Nährstoffneutral bedeutet bei der Erfindung, daß kaum pflanzenverfügbare Nährstoffe vorhanden sind, so daß die Zugabe von langsam verfügbar werdenden Nährstoffen notwendig sein kann, vorzugsweise als organische Nährstoffkombinationen bzw. als sogenannte ummantelte Düngemittel. Die Pflanzen können also zunächst wachsen, allerdings würden die Nährstoffe schon nach kurzer Zeit nicht mehr ausreichen, um ein weiteres Wachstum bzw. eine weitere Nährstoffversorgung der Pflanzen zu gewährleisten, weshalb es sich empfiehlt, zusätzlich den Dünger beizugeben.

Gemäß einer anderen zweckmäßigen Ausgestaltung der Erfindung sind die lebenden Pflanzenteile durch Sedumsprossen gebildet, die sich als besonders geeignet erwiesen haben und schnell wachsen.

In vorteilhafter Weise ist bei beiden Alternativen der Erfindung gemäß den nebengeordneten Patentansprüchen 1 und 2 als oberste Schicht noch ein Gittergewebe auf das Vegetationselement aufgelegt. Dieses Gittergewebe besitzt hinreichend grobe Maschen und ist durch einen mechanische Verbindung mit allen anderen Schichten des Vegetationselements gemeinsam mechanisch verbunden, vorzugsweise durch Fäden versteppt. Somit bildet das Vegetationselement als Ganzes eine stabile Einheit.

Das Gittergewebe schafft in vorteilhafter Weise die Möglichkeit, stumpf aneinander bzw. nebeneinander liegende Bahnen des Vegetationselements miteinander zu befestigen, indem die Ränder des Gittergewebes verrödelt, also aneinander befestigt werden. Die zunächst auf Stoß liegenden Matten bzw. Vegetationselemente können dadurch insgesamt eine Einheit bilden.

Ein weiterer Vorteil des Gittergewebes besteht darin, daß damit der Gefahr von Windsog entgegengewirkt werden kann.

Andere vorteilhafte Weiterbildungen der Erfindung sind in den Unteransprüchen angegeben.

Zum besseren Verständnis der Erfindung wird diese nachfolgend anhand der in der Zeichnung dargestellten Ausführungsbeispiele näher erläutert. Es zeigen:
- Fig. 1: einen Teil eines Vegetationselementes gemäß einer ersten Alternative der Erfindung in einer schematischen Querschnittsansicht,
- Fig. 2: einen Teil eines Vegetationselementes gemäß einer zweiten Alternative, ebenfalls in einer schematischen Querschnittsansicht, und
- Fig. 3: ein Vegetationselement gemäß Fig. 1 mit einer oberen Kiesschicht.

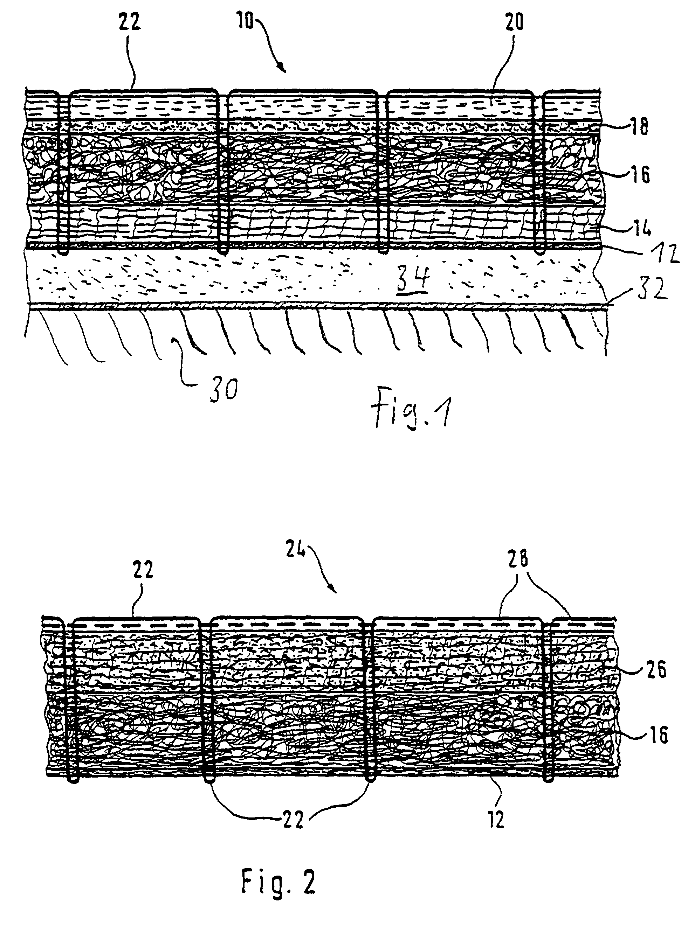

Das in Fig. 1 dargestellte Vegetationselement besitzt einen mehrschichtigen Aufbau und liegt als aufrollbare Vegetationsrollmatte 10 vor. Als unterste Schicht dient in an sich bekannter Weise ein poröses Vlies 12. Daran schließt sich eine untere Schicht 14 an, die aus Kokos, also aus einem nachwachsenden Rohstoff, besteht und im Ausführungsbeispiel etwa 1,0 cm dick ist.

Auf die untere Schicht 14 aus Kokos folgt eine Steinwollschicht 16 mit einer Dicke von etwa 2,0 cm. Auf der Steinwollschicht 16 befindet sich eine durch Saatgut und lebende Pflanzenteile gebildete Pflanzenschicht 18 als Wachstumsschicht zur Bildung einer Vegetation, die im Ausführungsbeispiel aus Sedum-Kräuter-Gräser besteht. Das Saatgut ist also Sedum-Kräuter-Gras, und als lebende Pflanzenteile werden Sedumsprossen verwendet. Zusätzlich befindet sich in der Pflanzenschicht 18 noch ein Dünger (als Depotdünger für etwa sechs Monate).

Der mehrschichtige Aufbau der Vegetationsrollmatte 10 wird durch eine obere Halteschicht 20 abgeschlossen, die aus Kokosmaterial besteht. Die Halteschicht 20 wirkt als Schutzschicht und verhindert einen Abtrag der lebenden Pflanzenteile und des Saatguts durch Wind. Darüberhinaus sorgt die Halteschicht für einen Bodenkontakt der lebenden Pflanzenteile zur Steinwollschicht 16, d.h. die lebenden Pflanzenteile werden etwas gegen diese Steinwollschicht 16 angedrückt und können somit besser wurzeln.

Die Schichten der Vegetationsrollmatte sind durch Fäden 22 versteppt und somit mechanisch miteinander verbunden, um die erforderliche Stabilität und den erforderlichen Zusammenhalt zu gewährleisten.

Die untere Schicht 14 aus Kokos ist ca. 1,0 cm, die Mineralwollschicht 16 ca. 2,0 und die obere Halteschicht 20 ca. 0,3 cm dick.

Als zweckmäßig sind in Fig. 1 für die bahnförmigen Vegetationsrollmatten 10 folgenden Abmessungen anzusehen: Länge: 12,0 m; Breite: 1,0 m; Gesamtdicke: etwa 3,3 - 3,5 cm; damit beträgt eine Liefereinheit 12 m². Das Gewicht bei Lieferung beträgt lediglich 2,0 kg/m². Eine Liefereinheit von 12 m² wiegt also 24,0 kg, was als sehr gering anzusehen ist.

Zum Zwecke einer Dachbegrünung wird auf einem Dach 30 eine Abdichtung 32 vorgesehen, und auf die Abdichtung 32 wird eine Substratschicht 34 aufgebracht. Auf dieser Substratschicht 34 wird schließlich die Vegetationsrollmatte 10 verlegt bzw. ausgerollt.

Bei der in Fig. 2 ohne ein Dach dargestellten Vegetationsrollmatte 24 folgt auf die untere Vliesschicht 12 unmittelbar die Mineralwollschicht 16, die auch hier vorzugsweise durch Steinwolle gebildet ist. Es fehlt also die in Fig. 1 gezeigte untere Kokosschicht 14.

An die Mineralwollschicht 16 schließt sich eine gemischte Kokos-Pflanzenschicht 26 an, die durch eine mit Saatgut und lebenden Pflanzenteilen vermischte Kokosschicht gebildet ist. Dabei können sich Saatgut und lebende Pflanzenteile zum Teil auch auf dieser Kokos-Pflanzenschicht 26 befinden. Entsprechend der Vegetationsrollmatte gemäß Fig. 1 kann der Kokos-Pflanzenschicht 26 ebenfalls ein Dünger beigegeben werden.

Die Kokos-Pflanzenschicht 26 wirkt hier sowohl als eine Wachstumsschicht als auch als eine Halteschicht (wie anhand von Fig. 1 beschrieben). Die Dicke der Kokos-Pflanzenschicht beträgt in dem dargestellten Ausführungsbeispiel ca. 1,5 cm bzw. das Flächengewicht liegt bei 500 g/m².

Die Vegetationsrollmatte 24 ermöglicht im Vergleich zu der in Fig. 1 gezeigten Vegetationsrollmatte 10 ein noch gleichmäßigeres und intensiveres Wachstum der Pflanzen, weil sich die Pflanzenteile und das Saatgut innerhalb der Kokos-Pflanzenschicht 26 besser und gleichmäßiger entwickeln können.

Oberhalb der Kokos-Pflanzenschicht 26 befindet sich noch ein Gittergewebe 28, welches im übrigen auch bei der Alternative gemäß Fig. 1 vorgesehen werden kann. Das Gittergewebe 28 ist zusammen mit den anderen Schichten der Vegetationsrollmatte 24 durch Fäden 22 versteppt und bietet einen Schutz gegen Windsogwirkung. Dies ist von Vorteil, wenn die Vegetationsrollmatten 10 bzw. 24 auf einem höheren Niveau, beispielsweise auf Dächern, verlegt werden, wo die Gefahr besteht, daß die Vegetationsrollmatten bzw. ihre Schichten durch Windsogwirkung abgehoben und weggeweht werden können.

Die Vegetationsrollmatte 10 bzw. 24 kann ohne Vorkultivierungszeit sehr rasch bei Bedarf produziert und anschließend innerhalb einer kurzen Zeit von etwa 48 Stunden verarbeitet und auf einem mit Substrat 34 versehenen Dach 30 zu dessen Begrünung ausgerollt und ausgelegt werden.

Wenn die erfindungsgemäße Vegetationsrollmatte 10 bzw 24 auf dem Dach 30 verlegt ist, können noch etwa 3 - 8 Wochen Zeit als Kultivierungszeit vergehen, bis die Vegetationsrollmatte 10 bzw. 24 fertig begrünt ist.

Ergänzend ist noch anzumerken, daß die in Fig. 1 dargestellte untere Schicht 14 aus Kokos eine Drainagefunktion übernehmen kann. Darüber hinaus können sich die Wurzeln der Pflanzen in diese untere Schicht 14 aus Kokos erstrecken.

Bei dem im Rahmen der Erfindung verwendeten Kokos bzw. Kokosmaterial kann es sich um Kokosfasern unterschiedlicher Länge oder um Kokosmull bzw. Kokostorf handeln; vorzugsweise in gebundener Form, z. B. als Matte.

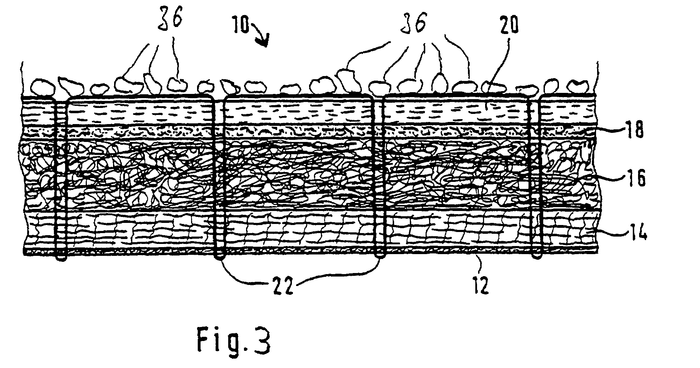

Fig. 3 zeigt als weitere Ausführungsform der Erfindung eine Vegetationsrollmatte 10 gemäß Fig. 1, jedoch ist auf die Oberfläche der Vegetationsrollmatte 10 noch eine dünne Kiesschicht 36 mit Kiessteinen aufgebracht. Durch die dünne Kiesschicht 36 wird die Vegetationsrollmatte 10 (bzw. 24) beschwert, wodurch ihre Lagesicherheit wegen des größeren Gesamtgewichts erhöht wird und der Gefahr entgegengetreten wird, daß die Vegetationsrollmatte 10 durch die infolge von Windsog auftretenden Kräfte von der Dachoberfläche abgehoben werden kann.

Durch die Kiesschicht 36 wird außerdem das Wachsen der Pflanzen bei trockener Witterung in vorteilhafter Weise begünstigt. Unter den einzelnen Kiessteinen kann nämlich Feuchtigkeit gespeichert werden, die sich während der Nacht ansammelt.

Die einzelnen Kiessteine der Kiesschicht sind übrigens nur während der Kultivierungszeit optisch sichtbar. Mit zunehmendem Pflanzenwachstum und mit zunehmender Begrünung wird die Kiessicht nämlich durch die Pflanzen verdeckt.

Auf die Oberfläche der Vegetationsrollmatte 10 bzw. 24 kann alternativ zu der dünnen Kiesschicht auch ein Ziegeldraht aufgebracht werden, bei dem der Draht bzw. die Drahtmaschen mit Ton ummantelt ist. Auch durch diese Maßnahme wird die Vegetationsrollmatte 10 bzw. 24 zur Erhöhung der Lagesicherheit beschwert.

In Fig.1 - 3 sind die Vegetationselemente 10 im nicht begrünten Zustand dargestellt.

## Patentansprüche

1. Aus mehreren Schichten bestehendes Vegetationselement (10) für die Begrünung von künstlichen Ebenen, wie Dächer oder anderen Flächen, insbesondere zur Begrünung von großen Flächen, wobei die einzelnen Schichten mechanisch miteinander verbunden sind, insbesondere Vegetationsrollmatte, mit folgendem Aufbau der einzelnen Schichten von unten nach oben:
- ein poröses Vlies (12) als unterste Schicht,
- eine untere Schicht (14) aus Kokos,
- eine Mineralwollschicht (16) aus Mineralwolle,
- eine durch Saatgut und lebende Pflanzenteile gebildete Pflanzenschicht (18),
- eine obere Halteschicht (20) als Schutzschicht,
wobei das Vegetationselement (10) ohne eine vorherige Kultivierung auf die künstliche Ebene aufgebracht ist.

2. Aus mehreren Schichten bestehendes Vegetationselement (10) für die Begrünung von künstlichen Ebenen, wie Dächer oder andere Flächen, insbesondere zur Begrünung von großen Flächen, wobei die einzelnen Schichten mechanisch miteinander verbunden sind, insbesondere Vegetationsrollmatte, mit folgendem Aufbau der einzelnen Schichten von unten nach oben:
- ein poröses Vlies (12) als unterste Schicht,
- eine Mineralwollschicht (16) aus Mineralwolle,
- eine gemischte Kokos-Pflanzenschicht (26), gebildet durch eine mit Saatgut und lebenden Pflanzenteilen vermischte Kokosschicht,
wobei das Vegetationselement (10) ohne eine vorherige Kultivierung auf die künstliche Ebene aufgebracht ist.

3. Vegetationselement nach Anspruch 1 oder 2, **dadurch gekennzeichnet, daß** als oberste Schicht ein Gittergewebe (28) aufgelegt ist, welches mechanisch mit den darunter befindlichen Schichten verbunden ist.

4. Vegetationselement nach Anspruch 3, **dadurch gekennzeichnet, daß** die Gittergewebe (28) stumpf aneinander liegender benachbarter Vegetationselemente mechanisch miteinander verbunden sind.

5. Vegetationselement nach einen oder mehreren der Ansprüche 1 - 4, **dadurch gekennzeichnet, daß** die Pflanzenschicht (18) bzw. die gemischte Kokos-Pflanzenschicht (26) zusätzlich Dünger enthält.

6. Vegetationselement nach einem der vorhergehenden Ansprüchen 1 - 5, **dadurch gekennzeichnet, daß** die Halteschicht (20) aus Kokosmaterial besteht und eine geringe Dicke von ca. 0,3 cm und/oder ein Flächengewicht von ca. 25 g/m² besitzt.

7. Vegetationselement nach einem oder mehreren der vorhergehenden Ansprüche 1 - 6, **dadurch gekennzeichnet, daß** die lebenden Pflanzenteile der Pflanzengattung der Sukkulenten angehören.

8. Vegetationselement nach einem oder mehreren der vorhergehenden Ansprüche 1 - 6, **dadurch gekennzeichnet, daß** die lebenden Pflanzenteile durch Sedumsprossen gebildet sind.

9. Vegetationselement nach Anspruch 7 und/oder 8, **dadurch gekennzeichnet, daß** das Saatgut und die lebenden Pflanzenteile der gleichen Pflanzenart zugeordnet sind.

10. Vegetationselement nach einem oder mehreren der vorhergehenden Ansprüche 2 - 9, **dadurch gekennzeichnet, daß** die gemischte Kokos-Pflanzenschicht (26) eine Dicke von ca. 1,5 cm und/oder ein Flächengewicht von ca. 500 g/m² besitzt.

11. Vegetationselement nach einem oder mehreren der vorhergehenden Ansprüche 1 - 10, **dadurch gekennzeichnet, daß** die Gesamtdicke des Vegetationselements (10) etwa 3,3 bis 3,5 cm beträgt.

12. Vegetationselement nach einem oder mehreren der vorhergehenden Ansprüche 1 - 11, **dadurch gekennzeichnet, daß** auf die Oberfläche des Vegetationselements (10) eine dünne Kiesschicht aus Kiessteinen aufgebracht ist.

13. Vegetationselement nach einem oder mehreren der vorhergehenden Ansprüche 1 - 11, **dadurch gekennzeichnet, daß** auf die Oberfläche des Vegetationselements (10) ein Ziegeldraht aufgebracht ist.

## Claims

1. Vegetation element (10) comprising several layers for greening artificial flat surfaces, such as roofs or other surfaces, particularly for greening large surfaces, the individual layers being mechanically interconnected, particularly a vegetation roll mat having the following structure of the individual layers from bottom to top:
- a porous nonwoven (12) as the bottom layer,
- a lower, coconut fibre layer (14),
- a mineral wool layer (16),
- a plant layer (18) formed from seed and living plant parts,
- an upper holding layer (20) as the protective layer,
in which the vegetation element (10) is placed on the artificial flat surface without prior cultivation.

2. Vegetation element (10) comprising several layers for greening artificial flat surfaces, such as roofs or other surfaces, particularly for greening large surfaces, in which the individual layers are mechanically interconnected, particularly vegetation roll mat having the following structure of the individual layers from bottom to top:
- a porous nonwoven (12) as the bottom layer,
- a mineral wool layer (16),
- a mixed coconut fibre-plant layer (26), formed by a coconut fibre layer mixed with seed and living plant parts,
in which the vegetation element (10) is placed on the artificial flat surface without prior cultivation.

3. Vegetation element according to claim 1 or 2, **characterized in that** the top layer is a scrim (28), which is mechanically connected to the underlying layers.

4. Vegetation element according to claim 3, **characterized in that** the scrim (28) of butt-linked, adjacent vegetation elements are mechanically interconnected.

5. Vegetation element according to one or more of the claims 1 to 4, **characterized in that** the plant layer (18) or the mixed coconut fibre-plant layer (26) additionally contains fertilizer.

6. Vegetation element according to one of the preceding claims 1 to 5,
**characterized in that** the holding layer (20) is of coconut fibre material and has a limited thickness of approximately 0.3 cm and/or a weight per unit area of approximately 25 g/m².

7. Vegetation element according to one or more of the preceding claims 1 to 6, **characterized in that** the living plant parts belong to the plant genus succulents.

8. Vegetation element according to one or more of the preceding claims 1 to 6, **characterized in that** the living plant parts are formed by sedum shoots.

9. Vegetation element according to claim 7 and/or 8, **characterized in that** the seed and living plant parts are of the same plant species.

10. Vegetation element according to one or more of the preceding claims 2 to 9, **characterized in that** the mixed coconut fibre-plant layer (26) has a thickness of approximately 1.5 cm and/or a weight per unit area of approximately 500 g/m².

11. Vegetation element according to one or more of the preceding claims 1 to 10, **characterized in that** the total thickness of the vegetation element (10) is approximately 3.3 to 3.5 cm.

12. Vegetation element according to one or more of the preceding claims 1 to 11, **characterized in that** a thin gravel layer is applied to the surface of the vegetation element (10).

13. Vegetation element according to one or more of the preceding claims 1 to 11, **characterized in that** a sling is placed on the surface of the vegetation element (10).

## Revendications

1. Elément de végétation à couches multiples (10), destiné à gazonner des plans artificiels, comme des toits ou d'autres surfaces, en particulier destiné à gazonner de grandes surfaces, les couches individuelles étant reliées mécaniquement l'une avec l'autre, composées en particulier de nattes enroulées de végétation, avec construction suivante des couches individuelles de bas en haut :
- une couche inférieure en non-tissé poreux (12),
- une couche basse (14) en coco,
- une couche de laine minérale (16) en laine minérale,
- une couche de culture (18), constituée de semences et de parties vivantes de plantes,
- une couche de retenue (20), comme couches de protection,
l'élément de végétation (10) étant apporté, sans culture précédente, sur les plans artificiels.

2. Elément de végétation à couches multiples (10), destiné à gazonner des plans artificiels, comme des toits ou d'autres surfaces, en particulier destiné à gazonner de grandes surfaces, les couches individuelles étant reliées mécaniquement l'une avec l'autre, composées en particulier de nattes enroulées de végétation, avec construction suivante des couches individuelles de bas en haut :
- une couche inférieure en non-tissé poreux (12),
- une couche de laine minérale (16) en laine minérale,
- une couche de plantes et de coco (26), constituée d'une couche de noix
de coco mélangée avec des semences et des parties vivantes de plantes, l'élément de végétation (10) étant apporté, sans culture précédente, sur les plans artificiels.

3. Elément de végétation suivant la revendication 1 ou 2, **caractérisé en ce que**, comme couche supérieure, est posé un tissu à grilles (28) qui est relié mécaniquement avec les couches qui se trouvent au-dessous.

4. Elément de végétation suivant la revendication 3, **caractérisé en ce que** les tissus en grilles (28) sont reliés mécaniquement ensemble aux éléments de végétation voisins placés bord à bord l'un contre l'autre.

5. Elément de végétation suivant l'une ou plusieurs des revendications précédentes 1 à 4, **caractérisé en ce que** la couche de plantes (18) ou la couche de plantes et de fibres de noix de coco mélangées contient du fumier additionnel.

6. Elément de végétation suivant l'une ou plusieurs des revendications précédentes 1 à 5, **caractérisé en ce que** la couche de retenue (20) consiste en une matière en fibres de noix de coco et comporte une petite épaisseur de 0,3 cm environ et/ou un grammage de 25 g/m² environ.

7. Elément de végétation suivant l'une ou plusieurs des revendications précédentes 1 à 6, **caractérisé en ce que** les parties de plantes vivantes appartiennent au genre des plantes grasses.

8. Elément de végétation suivant l'une ou plusieurs des revendications précédentes 1 à 6, **caractérisé en ce que** les parties de plantes vivantes sont formées par bourgeonnage d'orpin.

9. Elément de végétation suivant les revendications 7 et/ou 8, **caractérisé en ce que** les semences et les parties de plantes vivantes sont appliquées à la même sorte de plantes.

10. Elément de végétation suivant l'une ou plusieurs des revendications précédentes 2 à 9, **caractérisé en ce que** la couche (26) de plantes et de fibres de noix de coco mélangées a une épaisseur d'environ 1,5 cm et/ou un grammage d'environ 500 g/m².

11. Elément de végétation suivant l'une ou plusieurs des revendications précédentes 1 à 10, **caractérisé en ce que** l'épaisseur totale de l'élément de végétation (10) va de 3,3 à 3,5 cm environ.

12. Elément de végétation suivant l'une ou plusieurs des revendications précédentes 1 à 11, **caractérisé en ce que**, sur la surface supérieure de l'élément de végétation (10), est ajoutée une couche de graviers de silice.

13. Elément de végétation suivant l'une ou plusieurs des revendications précédentes 1 à 11, **caractérisé en ce que**, sur la surface supérieure de l'élément de végétation (10), est apporté un fil d'argile.
